# EUROPEAN PATENT SPECIFICATION

(11) **EP 3 509 414 B1**
(45) Date of publication and mention of the grant of the patent: **17.06.2020**
(21) Application number: 17702369.4
(22) Date of filing: 31.01.2017
(51) Int. Cl.: A01G 3/025

(54) **PRUNING TOOL**
ASTWERKZEUG
DISPOSITIF D'ÉMONDAGE

(30) Priority: 06.09.2016 DE 102016010678
(43) Date of publication of application: 17.07.2019
(73) Proprietor: Husqvarna AB, 561 82 Huskvarna (SE)
(72) Inventor: KOHL, Peter, 89257 Illertissen (DE); MÜLLER-BRAUN, Matthias, 89233 Neu-Ulm (DE)
(74) Representative: Finkele, Rolf
(86) International application number: PCT/EP2017/052041
(87) International publication number: WO 2018/046141

(56) References cited:
- DE-U1-202009 013 746
- FR-A- 334 481
- US-A- 1 179 595
- US-A- 2 286 418
- US-A1- 2004 098 866
- US-A1- 2015 135 543
- US-B1- 6 901 620

## Description

### TECHNICAL FIELD

The present invention relates to a gardening tool, and more particularly to a pruning tool.

### BACKGROUND

Pruning tools such as, but not limited to, pruning shears, secateurs, saw pruners and pole pruners used for trimming or cutting devices are well known in the art, e.g. US2015/0135543A1, US2286418, FR334481 and US6901620B1. These tools are generally used in areas such as, gardens and farms for their periodic maintenance. Particularly, the pole pruners are used for trimming or cutting branches of a low and a medium height plants or trees since they are provided with long handles or poles connected to a cutting implement. The cutting implement typically includes cutting blades and a drive mechanism, such as rope or cables, for operating the cutting blades via a transmission mechanism.

During operation, a user may find it necessary to retrieve cut branches from other branches of the plants or the trees. The user may find it difficult to reach and grasp the cut branches because the cut branches may get entangled with other branches of the plants or trees. The user may try to extend his body using the pruning tool for grasping the cut branches or may use aiding devices such as ladder or rope for removing the any cut branches. The use of ladder or other aiding devices may be precarious as the ground surface generally do not have a flat surface and sometimes may have loose soil. The use of aiding devices may increase the time and effort by the user causing fatigue, and may additionally increase maintenance cost. Therefore, in light of the foregoing, there is a need for an improved pruning tool.

### SUMMARY

In view of the above, it is an objective of the present invention to solve or at least reduce the problems discussed above. The present invention provides a tool according to independent claim 1.

According to an aspect of the present invention, the clamping member includes a first end and a second end opposite to the first end. The first end is provided with a first circular serrated plate and the second end is provided with a second circular serrated plate.

According to an aspect of the present invention, the hook of the hook assembly includes a first contacting end and a second contacting end opposite to the first contacting end. Each of the first contacting end and the second contacting end might be provided with a plurality of serrations. The plurality of serrations are configured to match with the first circular serrated plate and the second circular serrated plate of the clamping member for coupling the hook with the clamping member. The coupling between the hook and the clamping member through the plurality of serrations, and the first circular serrated plate and the second serrated plate provides a provision for adjusting an angle of the hook with respect to the clamping member. Thus, the hook is rotatably connected to the clamping member, enabling orientation of the hook between an operating position and a non-operating position.

According to an aspect of the present invention, the hook assembly further includes an adjusting mechanism. The adjusting mechanism includes a knob and a first bolt. The first bolt is threadingly coupled with the knob. The knob is rotatable in a predetermined direction for loosening the hook with respect to the clamping member. Additionally, the rotated knob releases the clamping member from the pole for adjusting a position of the hook assembly along the pole.

According to another aspect of the present invention, the adjusting mechanism includes a flap hinged to the clamping member. The flap is liftable for loosening the hook with respect to the clamping member. Additionally, the lifted flap releases the clamping member from the pole for adjusting a position of the hook assembly along the pole.

According to the present invention, the hook assembly includes a clamping member and a hook. The clamping member is configured to conform to an outer surface of the pole and the hook integrally connected with the clamping member. The implement portion includes a tool portion and a housing. The tool portion can be any one of a saw, pole pruners, and cutting blades.

According to another aspect of the present invention, the tool portion includes a movable member and a non-movable member.

According to another aspect of the present invention, the hook assembly is fixedly connected to the non-movable member of the tool portion.

According to another aspect of the present invention, the hook assembly is removably connected to non-movable member of the tool portion.

According to another aspect of the present invention, the hook assembly is fixedly connected to the housing.

According to another aspect of the present invention, the hook assembly is removably connected to the housing.

### BRIEF DESCRIPTION OF THE DRAWINGS

The invention will be described in more detail with reference to the enclosed drawings, wherein:
FIG. **1** illustrates a side view of a tool including a hook assembly provided at a non-movable member, not according to the present invention;
FIG. **2** illustrates a side view of a tool including a hook assembly connected with a non-movable member, not according to the present invention;
FIG. **3** illustrates a side view of a tool including a hook assembly provided at a housing, not according to the present invention;
FIG. **4** illustrates a side view of a tool including a hook assembly connected to a housing, not according to the present invention;
FIG. **5** illustrates a side view of a tool including a hook assembly connected to a housing, not according to the present invention;
FIG. **6A** illustrates a side view of a tool including a hook assembly coupled on a pole of the tool, not according to the present invention;
FIG. **6B** illustrates a perspective view of the hook assembly of FIG. **6A****;**
FIG. **7A** illustrates an exploded view of a hook assembly of a tool, according to the present invention;
FIG. **7B** illustrates an assembled view of the hook assembly of FIG. **7A**;
FIGS. **8A** and **8B** illustrate various perspective views of a tool having the hook assembly shown in FIGS. **7A** and **7B****,** according to the present invention;
FIG. **9A** illustrates an exploded view of a hook assembly according to an embodiment of the present invention;
FIG. **9B** illustrates an assembled view of the hook assembly of FIG. **9A**;
FIG. **10** illustrates a perspective view of a tool having the hook assembly shown in FIGS. **9A** and **9B****,** and
FIG. **11** illustrates a perspective view of a saw pruner tool having the hook assembly shown in FIGS. **9A** and **9B****,** according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. The scope of the invention is limited by the appended claims. In the drawings, like numbers refer to like elements.

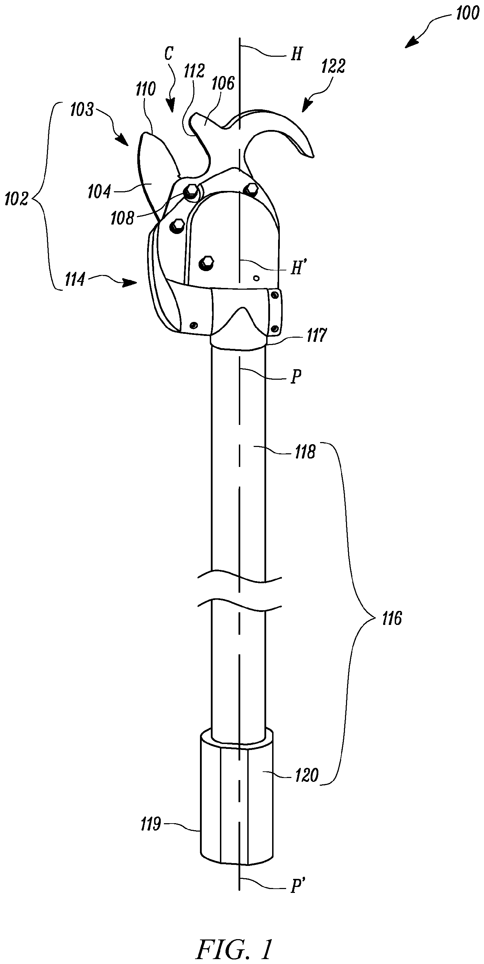

FIG. **1** illustrates the side view of a tool **100,** not according to the present invention. The tool **100** may be a pole pruner. It is to be understood that the tool can be any other pruning tool which is used in applications including, but not limited to, gardening and landscaping. The tool **100** may be used for pruning branches or twigs of a tree or a plant or a bush. The tool **100** includes an implement portion **102** connected to a first end **117** of a pole **116.** The pole **116** has a second end **120** distal to the first end **117** for holding the tool **100** by a user. The implement portion **102** includes a tool portion **103** and a housing **114.** The tool portion **103** may include at least one movable member **104** and at least one non-movable member **106.** As illustrated in the FIG. **1****,** the tool portion **103** includes a blade arrangement with the movable member **104,** embodied as a movable blade. The movable member **104** is pivotally connected to a non-movable member **106.** The term 'movable member' **104** as used herein is interchangeably used as "movable blade". Also, the term "non-movable member" **106** is interchangeably used as "stationary blade". The movable blade **104** may perform a pivotal movement with respect to the stationary blade **106** about a pivot point **108** during a cutting action. The movable blade **104** and the stationary blade **106** may include cutting edges **110** and **112,** respectively for performing cutting or trimming operations. The cutting edges **110** and **112** of the movable member **104** and the non-movable member **106** may be sharpened and/or be serrated in order to cut the branches or the twigs. The movable blade **104** and the stationary blade **106** of the tool portion **103** forms a cutting jaw **"C".** The cutting jaw **"C"** is an area formed between the cutting edges **110, 112** of the movable blade **104** and the stationary blade **106,** respectively.

The stationary blade **106** may be designed to provide guidance to the branches to move towards the cutting edges **110, 112.** In various other embodiments, the movable member **104** may include two or more movable blades. Further, the various details of the implement portion **102,** as illustrated in the **FIG. 1****,** are purely exemplary in nature, and the implement portion **102** may include any other design falling within the scope of the present invention.

The housing **114** may be coupled with the implement portion **102.** The coupling between the housing **114** and the implement portion **102** can be established using fasteners such as bolts or rivets. The tool **100** may further include a drive mechanism (not shown) provided in the housing **114.** The drive mechanism can be an electric motor with gears or a rope mechanism.

In the illustrated example of **FIG. 1****,** the housing **114** and the pole **116** may be detachably connected to each other by using a coupling mechanism including, but not limited to, a snap lock coupling mechanism or press fit coupling mechanism (not shown). During coupling of the pole **116** with the housing **114,** a longitudinal axis **H-H'** of the housing **114** is aligned with a longitudinal axis **P-P'** of the pole **116.**

In an example, the pole **116** may be configured as a telescopic pole. The telescopic pole may include a first tube **118** and a second tube **120** telescopically connected to the first tube **118.** The first tube **118** and the second tube **120** may be configured to lock each other using a clamp (not shown) which may be provided on the pole **116** to restrain a relative rotational movement between the first tube **118** and the second tube **120** during operation of the tool **100.** In an embodiment, the first tube **118** may be configured to lock at any length with respect to the second tube **120.** Thus, user can adjust height of the tool **100** based on the requirements during the operation. Thereby, the pole **116** may enable pruning of branches and twigs or any other portion of the plants or trees that are located at various heights from a ground surface. The first tube **118** and the second tube **120** may have a circular cross-section. It is to be understood that the first tube **118** and the second tube **120** may have cross-sections other than the circular cross-section. For example, the first tube **118** and the second tube **120** may have a cross-section including geometrical shapes such as elliptical, polygonal, triangular and square or non-geometric shapes.

The tool **100** includes a hook assembly **122** disposed on the implement portion **102.** In the illustrated example, the hook assembly **122** is disposed on the tool portion **103** of the implement portion **102,** particularly at the non-movable member **106** of the tool portion **103.** In this example, the hook assembly **122** forms an integral part of the non-movable member 106 and can be used for pulling the cut or trimmed branches or twigs from the trees or the plants. Thus, the hook assembly **122** is fixedly connected to the non-movable member **106** of the tool portion **103.** The hook assembly **122** may be in a shape including, but not limited to, arcuate shape. The hook assembly **122** extends from the non-movable member **106.** The arcuate shape of the hook assembly **122** is configured to contact and create a loop around the cut branches or twigs. Thus the loop enables holding of the cut branches or the twigs of the trees or the plants during the operation of the tool **100.** In one example, the hook assembly **122** can be made from material such as, but not limited to, metal such as aluminum or non-metal such as plastic or elastomeric material or a composite material. In another example, the hook assembly **122** can be made from material similar to that of the material used for manufacturing the non-movable member **106.**

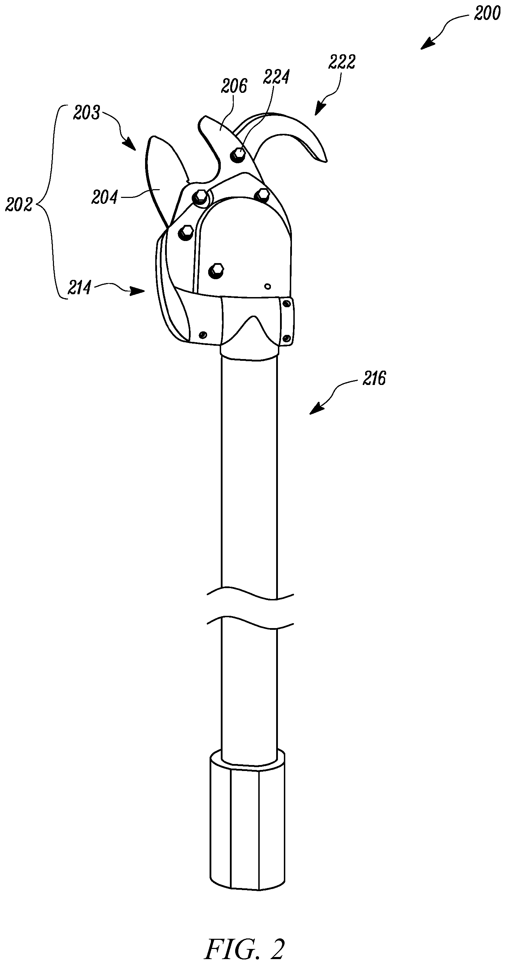

FIG. **2** illustrates the side view of a tool **200,** not according to the present invention. The tool **200** includes a hook assembly **222** removably connected with a non-movable member **206,** of a tool portion **203** of an implement portion **202.** The implement portion **202** includes the tool portion **203** and a housing **214.** The tool portion **203** includes a movable member **204** and the non-movable member **206.** The hook assembly **222** in the illustrated example has an arcuate shape similar to the arcuate shape of the hook assembly **122,** as illustrated in FIG. 1. In the illustrated example, the hook assembly **222** is removably connected to the non-movable member **206** using fastening means, such as, but not limited to, a bolt **224.** The fastening means may further include rivets or any other means which serves the purpose of connecting the hook assembly **222** with the non-movable member **206.** The hook assembly **222** may be movable about fastening point by loosening the bolt **224,** thereby adjusting orientation of the hook assembly **222** with respect to the pole **116** based on the user's requirement. In an example, the hook assembly **222** may also be removed, if the user desires to operate the tool **200** for cutting operations alone in a situation, for example, the branches or twigs of the trees or plants are not dense and may require only cutting or trimming operations.

Further, as the hook assembly **222** is removably connected to the non-movable member **206,** the hook assembly **222** can be positioned or re-positioned in any orientation or angle with respect to the non-movable member **206** and the pole **216** such that the tool **200** may be configured for holding and pulling the cut or trimmed branches from the trees or plants. Moreover, whenever the tool **200** is not in use and in case of maintenance and cleaning, the hook assembly **222** can be removed and stored separately. The hook assembly **222** is replaceable and retrofittable to the existing pole pruners.

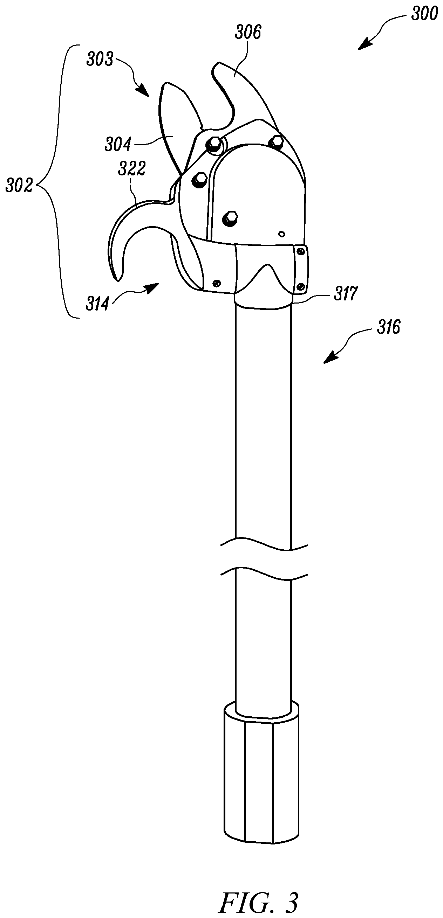

FIG. **3** illustrates the side view of a tool **300,** not according to the present invention. The tool **300** includes a hook assembly **322.** The tool **300** includes an implement portion **302** disposed at a first end **317** of the pole **316** as shown in FIGS. **1** and **2****.** The implement portion **302** includes a tool portion **303** and a housing **314.** The tool portion **303** includes a movable member **304** and a non-movable member **306.** The hook assembly **322** in the illustrated example is formed as an integral part of the housing **314.** Thus, the hook assembly **322** is fixedly connected to the housing **314.** The hook assembly **322** is integrally manufactured with the housing **314,** using various processes known in the art.

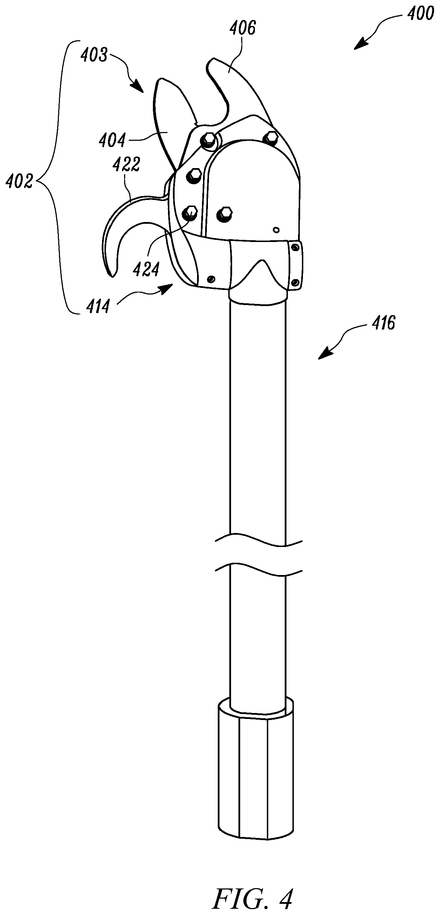

FIG. **4** illustrates the side view of a tool **400,** not according to the present invention. The tool **400** includes a hook assembly **422** removably connected to a housing **414.** The tool **400** further includes an implement portion **402.** The implement portion **402** includes a tool portion **403** and the housing **414.** The tool portion **403** includes a movable member **404** and a non-movable member **406.** The hook assembly **422** can be connected using fastening means including, but not limited to the bolt **424.** The fastening means may also include rivets.

As the hook assembly **422** is removably connected to the housing **414,** the hook assembly **422** can be positioned or re-positioned in any orientation or angle with respect to the housing **414** and the pole **416.** Moreover, whenever the tool **400** is not in use and in case of maintenance and cleaning, the hook assembly **422** can be removed and stored separately. The hook assembly **422** is also replaceable and retrofittable to the existing pole pruners.

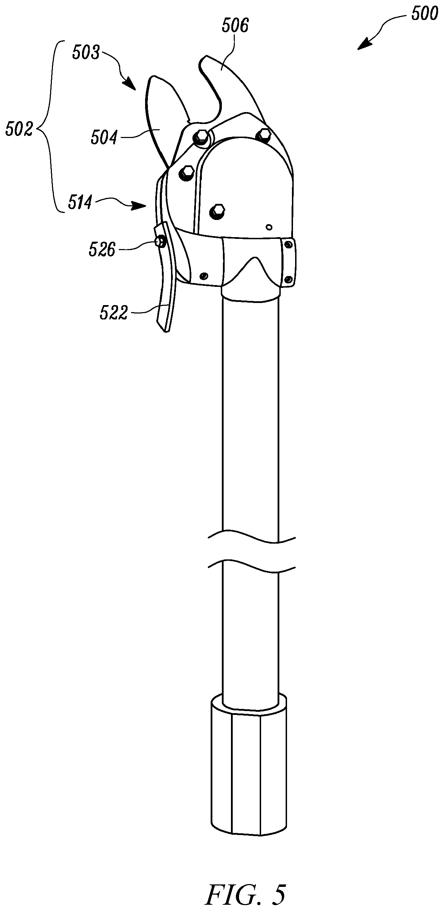

FIG. **5** illustrates the side view of a tool **500,** not according to the present invention. The tool **500** includes a hook assembly **522.** The hook assembly **522** is connected to a housing **514.** The tool **500** further includes an implement portion **502.** The implement portion **502** includes a tool portion **503** and the housing **514.** The tool portion **503** includes a movable member **504** and a non-movable member **506.** The hook assembly **522** can be connected using fastening means including, but not limited to, a bolt **526.** The fastening means may also include rivets or screws. In the illustrated example, the hook assembly **522** is a flat member disposed at the housing **514.** The tool **500,** may be applied at places where the user may find space constraint when the branches are closely located limiting the intervention of the tool **500** and the hook assembly **522** through the branches in the plants or the trees.

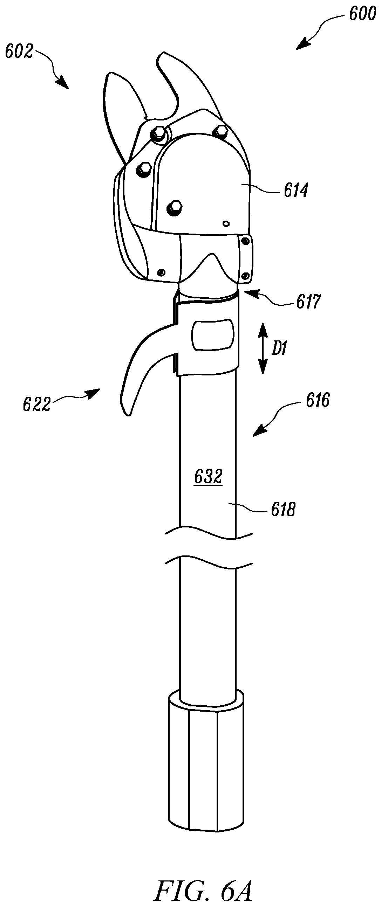

FIG. **6A** illustrates the side view of a tool **600,** not according to the present invention. The tool **600** includes a hook assembly **622** disposed at a first end **617** of a pole **616.** The hook assembly **622** is configured to slide along the pole **616** in a direction "**D1**". In an example, the hook assembly **622** may be disposed on a first tube **618** of the pole **616** and below a housing **614** of an implement portion **602.**

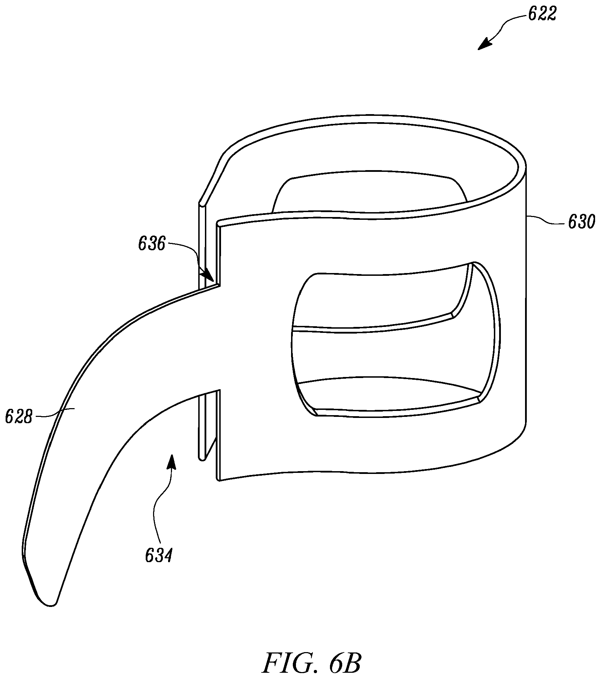

FIG. **6B** illustrates a perspective view of the hook assembly **622,** not according to the present invention. The hook assembly **622** is embodied as a unitary body. The hook assembly **622** includes a clamping member **630** conforming to an outer surface **632** (shown in FIG. **6A****)** of the first tube **618** of the tool **600.** The hook assembly **622** further includes a hook **628** extending from a first end **636** of the clamping member **630,** i.e., the hook **628** is an integral part of the clamping member **630.** The hook **628** is an arcuate shape extending horizontally for a predetermined length and thereafter vertically downwards, creating a mouth portion **634.** The mouth portion **634** is adapted to accommodate the cut branches or the twigs of the trees or the plants during operation. In an alternative embodiment, the hook assembly **622** can employ a fastener (not shown) to secure the hook assembly **622** at any length on the pole **616.** The hook assembly **622** is also replaceable and retrofittable to the existing pole pruners.

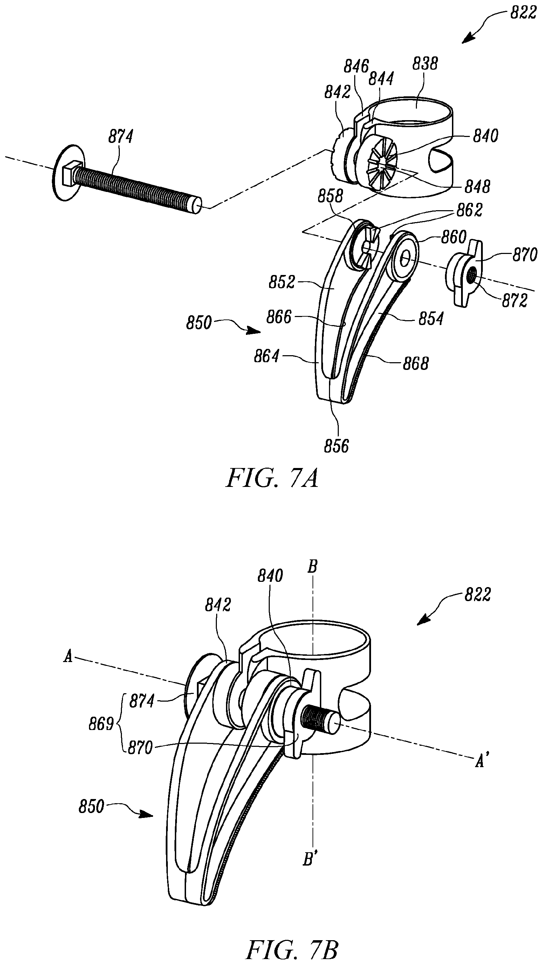

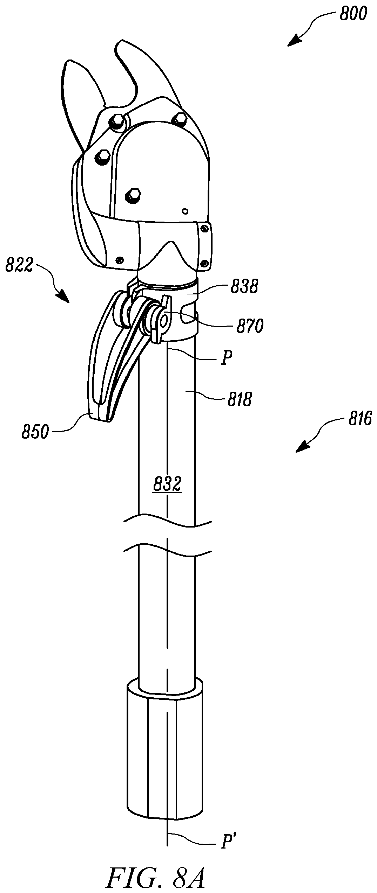

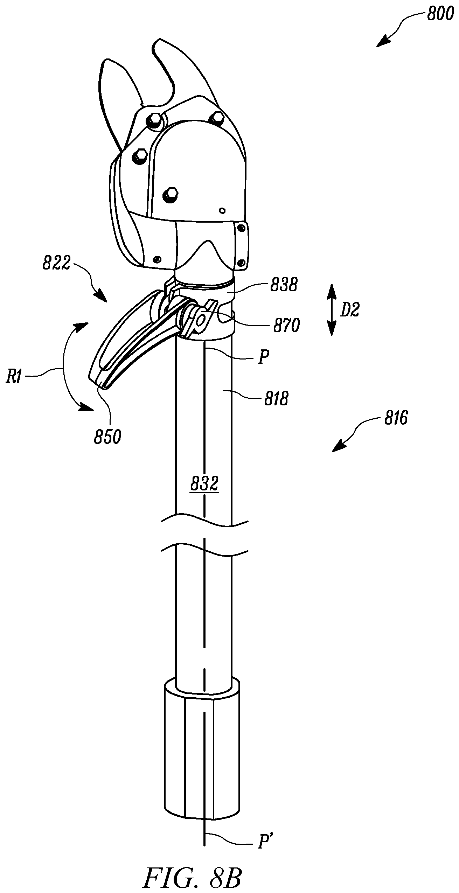

FIG. **7A** illustrates the exploded view of a hook assembly **822,** according to an embodiment of the present invention. The hook assembly **822** includes a clamping member **838** configured to conform on an outer surface **832** of a pole **816** of a tool **800** (shown in FIGS. **8A** and **8B**). The clamping member **838** further includes a first circular serrated plate **840** and a second circular serrated plate **842** at a first end **844** and a second end **846** of the clamping member **838,** respectively. The clamping member **838** and the hook assembly **822** can be made using a material, including but not limited to, a metallic material like aluminium, a non-metallic material like, plastic and an elastomeric material, and a composite material. Each of the first circular serrated plate **840** and the second circular serrated plate **842** are provided with a central hole **848.**

The hook assembly **822** further includes a hook **850** having two arms **852, 854** extending from a tip **856** of the hook **850.** The two arms **852, 854** are provided with a first contacting end **858** and a second contacting end **860,** respectively. The first contacting end **858** and the second contacting end **860** are further provided with a plurality of serrations **862,** arranged at a predetermined angle, such that the plurality of serrations **862** is configured to couple with the first circular serrated plate **840** and the second circular serrated plate **842** of the clamping member **838.** The hook **850** in the illustrated embodiment is in a shape, including but not limited to, an arcuate shape. However, the hook **850** can be made in any shape such as flat shape for accommodating the cut branches or twigs of the trees or plants. The hook **850** is provided with an outer surface **864** and an inner surface **866.** The inner surface **866** of the hook **850** is provided with a plurality of ribs **868** for providing friction force or gripping force during operation of the tool **800.**

The hook assembly **822** is further provided with an adjusting mechanism **869** (shown in FIG. **7B**), embodied as a knob **870** and a first bolt **874** arrangement in this embodiment. The knob **870** has an internal threaded hole **872,** to match with corresponding threads of the first bolt **874** such that the first bolt **874** is threadingly coupled with the knob **870.** The hook **850** is configured to rotatably connect with the clamping member **838,** during which the first contacting end **858** of the hook **850** can be coupled with the second circular serrated plate **842** of the clamping member **838** and the second contacting end **860** of the hook **850** can be coupled with the first circular serrated plate **840** of the clamping member **838.** The plurality of serrations **862** on the first and second contacting ends **858** and **860** can co-operate with the second and first circular serrated plates **842** and **840** of the clamping member **838** to adjust the angle of the hook **850** with respect to the clamping member **838.**

FIG. **7B** illustrates the assembled view of the hook assembly **822,** according to an embodiment of the present invention. An axis **A-A'** of the knob **870,** the first circular serrated plate **840**, the second circular serrated plate **842** and the first bolt **874** is perpendicular with respect to an axis **B-B'** of the clamping member **838.** The hook **850** is pivotally connected to the clamping member **838,** enabling orientation of the hook **850** between an operating position and a non-operating position. The term "operating position" as used herein refers to a position of the hook **850** at which the hook **850** is making an angle with respect to longitudinal axis **P-P'** of the pole **816** (shown in FIG. **8B**) or with respect to the axis **B-B'** of the clamping member **838.**

FIGS. **8A** and **8B** illustrate the perspective views of a tool **800** with the hook assembly **822** shown in the FIGS. **7A** and **7B****,** according an embodiment of the present invention. The hook assembly **822** is disposed on the first tube **818** of the pole **816.** The knob **870** of the hook assembly **822** can be rotated in a predetermined direction for loosening the hook **850** with respect to the clamping member **838.** The knob **870** can be rotated manually. Once the knob **870** is rotated for loosening, the hook **850** assembled with the clamping member **838** is freed to rotate with respect to the longitudinal axis **P-P'** of the pole **816.**

As shown in FIG. **8B****,** after loosening the knob **870,** the hook **850** can be rotatable further in a rotating direction "**R1**". Additionally, the knob **870** rotated in the predetermined direction releases the clamping member **838** from the pole **816** for adjusting a position of the hook assembly **822** along the pole **816,** i.e., the clamping member **838** is freed to adjust the hook assembly **822** along the first tube **818** of the pole **816** in a direction **"D2".** Thus, the user can adjust the position or height of the hook assembly **822** by sliding up or sliding down the hook assembly **822** along the pole **816.** The hook assembly **822** can be locked or fixed at a desired height on the pole **816** by rotating the knob **870** in a direction opposite to that of the direction of rotation used for loosening the hook assembly **822** or the clamping member **838.** Thus, the position of the hook assembly **822** can be altered based on the requirement of the user.

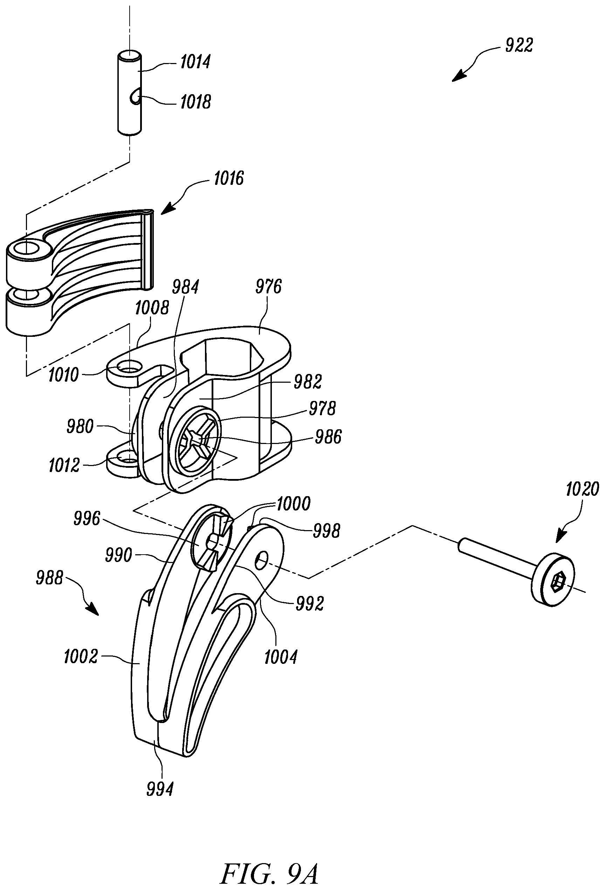

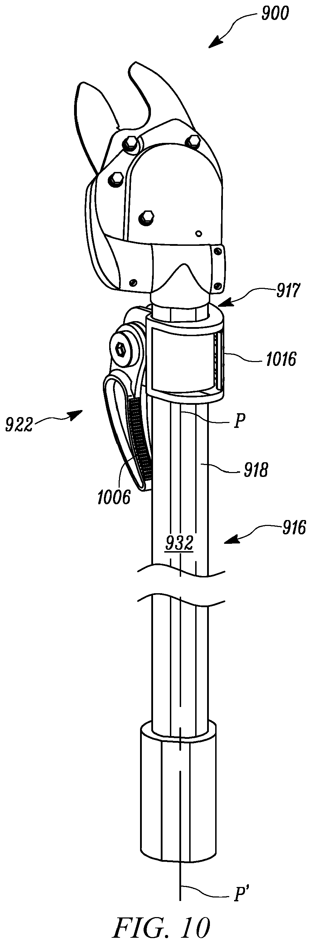

FIG. **9A** illustrates the exploded view of a hook assembly **922** according to another embodiment of the present invention. The hook assembly **922** includes a clamping member **976** configured to conform on an outer surface **932** of a pole **916** of a tool **900** (shown in FIG. **10**). The clamping member **976** further includes a first circular serrated plate **978** and a second circular serrated plate **980** at a first end **982** and a second end **984** of the clamping member **976,** respectively. The clamping member **976** and the hook assembly **922** can be made using a material, including but not limited to, a metallic material like aluminium, a non-metallic material like, plastic and an elastomeric material, and a composite material. Each of the first circular serrated plate **978** and the second circular serrated plate **980** are provided with a central hole **986.**

The hook assembly **922** further includes a hook **988** having two arms **990, 992** extending from a tip **994** of the hook **988.** The two arms **990, 992** are provided with a first contacting end **996** and a second contacting end **998,** respectively. The first contacting end **996** and the second contacting end **998** are further provided with a plurality of serrations **1000,** arranged at a predetermined angle, such that the plurality of serrations **1000** are configured to couple with the first circular serrated plate **978** and the second circular serrated plate **980.** The hook **988** has an arcuate shape with an outer surface **1002** and an inner surface **1004.** The inner surface **1004** of the hook **988** is provided with a plurality of ribs **1006** (shown in FIG. **10**) for providing frictional force or gripping force during operation of the tool **900.** The clamping member **976** further includes a bracket **1008** having two through holes **1010, 1012** at the second end **984** of the clamping member **976.** The through holes **1010, 1012** are configured to receive a stud pin **1014** for fixing a flap **1016** with the bracket **1008** configuring as a hinge point at the second end **984** of the clamping member **976.** The hook assembly **922** includes an adjusting mechanism **1015** including the flap **1016** hinged to the clamping member **976,** i.e. the flap **1016** acts as the adjusting mechanism **1015** in this embodiment. The stud pin **1014** is provided with a hole **1018** at a middle portion of the stud pin **1014.**

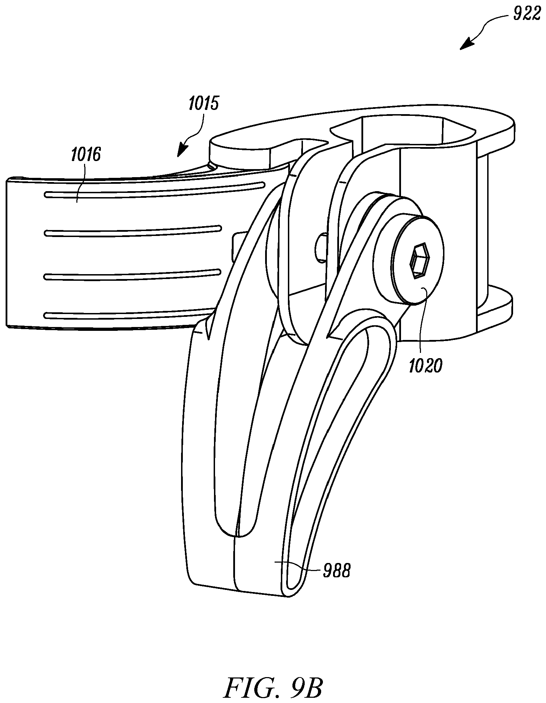

The flap **1016** includes an arcuate body conforming to an outer surface of the clamping member **976,** and through the stud pin **1014** forming a hinge mechanism at the second end **984** thereof. The hook assembly **922** is further provided with a threaded bolt **1020** for assembling of the hook **988** with the clamping member **976.** The flap **1016** is rotatably hinged at the second end **984** such that the hole **1018** of the stud pin **1014** will align with the threaded bolt **1020** when the flap **1016** is rotated about the stud pin **1014.** The hook **988** is configured to rotatably connect with the clamping member **976,** during which the first contacting end **996** of the hook **988** may couple with the second circular serrated plate **980** of the clamping member **976** and the second contacting end **998** of the hook **988** may couple with the first circular serrated plate **978** of the clamping member **976.** The plurality of serrations **1000** on the first and second contacting ends **996** and **998** can co-operate with the second and first circular serrated plates **980** and **978** of the clamping member **976** to adjust the angle of the hook **988** with respect to the clamping member **976.** FIG. **9B** illustrates an assembled view of the hook assembly **922.**

FIG. **10** illustrates the perspective view of the tool **900** with the hook assembly **922** shown in FIGS. **9A** and **9B****,** according to an embodiment of the present invention. The hook assembly **922** is coupled at a first end **917** of the first tube **918** of the pole **916.** The flap **1016** of the hook assembly **922** is lifted from the outer surface of the clamping member **976** for loosening the hook **988.** The flap **1016** can be lifted manually. Once the flap **1016** is lifted for loosening, the hook **988** assembled with the clamping member **976** is freed for rotation of the hook **988** with respect to the longitudinal axis **P-P'** of the pole **916.** Additionally, the lifted flap **1016** releases the clamping member **976** from the pole **916** for adjusting a position of the hook assembly **922** along the pole **916,** i.e., the clamping member **976** is freed for displacing the hook assembly **922** along the first tube **918** of the pole **916.** Thus, the user can eventually displace the position or height of the hook assembly **922** by sliding up or sliding down the hook assembly **922** along the pole **916.** The hook assembly **922** can be locked or fixed at any height on the pole **916** by releasing the lifted flap **1016** to conform the flap **1016** to the outer surface of the clamping member **976.** Thus, the position of the hook assembly **922** can be altered or fixed based on the requirement of the user.

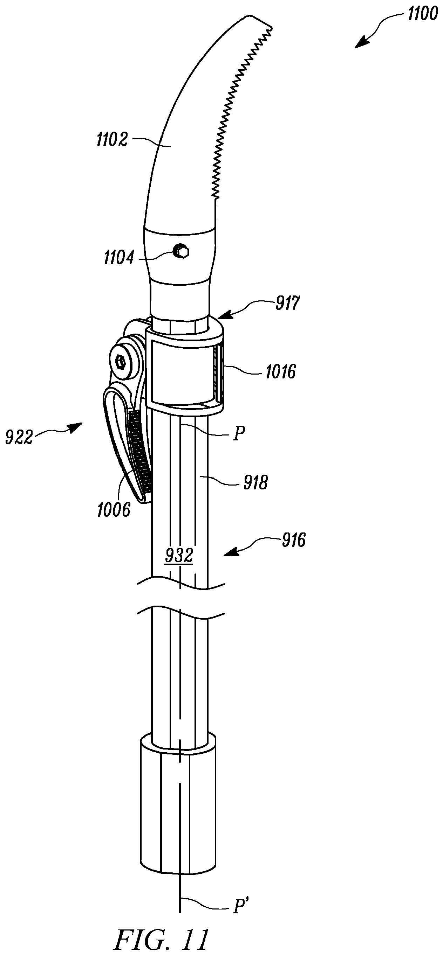

FIG. **11** illustrates a perspective view of a saw pruner tool **1100** having the hook assembly **922** shown in FIGS. **9A** and **9B** according to another embodiment of the present invention. The saw pruner tool **1100** includes a saw **1102** removably coupled to the pole **916** through a bolt **1104.** It is to be understood that the pole **916** can be used in any other pruning or trimming tools for gardening or landscaping purposes. The hook assembly **922** is coupled at the first end **917** of the first tube **918** of the pole **916.** The flap **1016** of the hook assembly **922** is lifted from the outer surface of the clamping member **976** for loosening the hook **988.** The flap **1016** can be lifted manually. Once the flap **1016** is lifted for loosening, the hook **988** assembled with the clamping member **976** is freed for rotation of the hook **988** with respect to the longitudinal axis **P-P'** of the pole **916.** Additionally, the clamping member **976** is also freed for displacing the hook assembly **922** along the first tube **918** of the pole **916.** Thus, the user can eventually displace the position or height of the hook assembly **922** by sliding up or sliding down the hook assembly **922** along the pole **916.** The hook assembly **922** can be locked or fixed at any height on the pole **916** by closing or releasing the lifted flap **1016** to conform to the outer surface of the clamping member **976.** Thus, the position of the hook assembly **922** can be altered or fixed based on the requirement of the user.

The tools **100, 200, 300, 400, 500, 600, 800, 900,** and **1100** having the hook assembly **122, 222, 322, 422, 522, 622, 822,** and **922** find its potential application in the areas including but not limited to, gardening and landscaping applications.

In an embodiment the hook assemblies **122** - **522** are configured adjacent to the implement portion **102-502,** and the user operating the pruning tool may find relatively easier for pulling the trimmed or cut branches down as the user need not change his/her position after trimming or cutting. Moreover, the same tool **100-1100** can be used for removing and pulling the cut branches or twigs from the trees or plants if the cut branches or twigs get stuck at the trees or plants.

In an embodiment, the tool portion **103, 203, 303, 403,** and **503** can be any one of a saw, pole pruners, and cutting blades.

In the drawings and specification, there have been disclosed preferred embodiments and examples of the invention and, although specific terms are employed, they are used in a generic and descriptive sense only and not for the purpose of limitation of the scope of the invention being set forth in the following claims.

### PART LIST

- 100: Tool
- 102: Implement portion
- 103: Tool portion
- 104: Movable member
- 106: Non-movable member
- 108: Pivot point
- 110: Cutting edge
- 112: Cutting edge
- 114: Housing
- 116: Pole
- 117: First end
- 118: First tube
- 120: Second tube
- 122: Hook assembly or hook
- 200: Tool
- 202: Implement portion
- 203: Tool portion
- 204: Movable member
- 206: Non-movable member
- 214: Housing
- 216: Pole
- 222: Hook assembly or hook
- 224: Bolt
- 300: Tool
- 302: Implement portion
- 303: Tool portion
- 304: Movable member
- 306: Non-movable member
- 314: Housing
- 316: Pole
- 317: First end
- 322: Hook assembly or hook
- 400: Tool
- 402: Implement portion
- 403: Tool portion
- 404: Movable member
- 406: Non-movable member
- 414: Housing
- 416: Pole
- 422: Hook assembly or hook
- 424: Bolt
- 500: Tool
- 502: Implement portion
- 503: Tool portion
- 504: Movable member
- 506: Non-movable member
- 514: Housing
- 522: Hook assembly or hook
- 526: Bolt
- 600: Tool
- 602: Implement portion
- 614: Housing
- 616: Pole
- 617: First end
- 618: First tube
- 622: Hook assembly
- 628: Hook
- 630: Clamping member
- 632: Outer surface
- 634: Mouth portion
- 636: First end
- 800: Tool
- 816: Pole
- 818: First tube
- 822: Hook assembly
- 832: Outer surface
- 838: Clamping member
- 840: First circular serrated plate
- 842: Second circular serrated plate
- 844: First end
- 846: Second end
- 848: Central hole
- 850: Hook
- 852: Arm
- 854: Arm
- 856: Tip
- 858: First contacting end
- 860: Second contacting end
- 862: Plurality of serrations
- 864: Outer surface
- 866: Inner surface
- 868: Plurality of ribs
- 869: Adjusting mechanism
- 870: Knob
- 872: Threaded hole
- 874: First bolt
- 900: Tool
- 916: Pole
- 917: First end
- 918: First tube
- 922: Hook assembly
- 932: Outer surface
- 976: Clamping member
- 978: First circular serrated plate
- 980: Second circular serrated plate
- 982: First end
- 984: Second end
- 986: Central hole
- 988: Hook
- 990: Arm
- 992: Arm
- 994: Tip
- 996: First contacting end
- 998: Second contacting end
- 1000: Plurality of serrations
- 1002: Outer surface
- 1004: Inner surface
- 1006: Plurality of ribs
- 1008: Bracket
- 1010: Hole
- 1012: Hole
- 1014: Stud pin
- 1015: Adjusting mechanism
- 1016: Flap
- 1018: Hole
- 1020: Threaded bolt
- 1100: Saw pruner tool
- 1102: Saw
- 1104: Bolt
- P-P': Longitudinal axis
- H-H': Longitudinal axis
- A-A': Axis
- B-B': Axis
- C: Cutting jaw
- D1: Direction
- D2: Direction
- R1: Rotating direction

## Claims

1. A tool (800, 900, 1100) comprising:
an implement portion (1102) ;
a pole (816, 916) having a first end (917), the implement portion (1102) connected to the first end (917) of the pole (816, 916); and
a hook assembly (822, 922) disposed on the pole (816, 916), said tool being **characterised by** the hook assembly (822, 922) including:
a clamping member (838, 976) conforming to an outer surface (832, 932) of the pole (816, 916); and
a hook (850, 988) rotatably connected with the clamping member (838, 976), wherein the hook (850, 988) is adapted to orient between an operating position and a non-operating position.

2. The tool (800, 900, 1100) of claim 1, wherein the hook (850, 988) comprises a first contacting end (858, 996) and a second contacting end (860, 998) opposite to the first contacting end (858, 996), wherein each of the first contacting end (858, 996) and the second contacting end (860, 998) is provided with a plurality of serrations (962, 1000).

3. The tool (800, 900, 1100) of claim 2, wherein the clamping member (838, 976) comprises a first end (844, 982) and a second end (846, 984) opposite to the first end (844, 982), wherein the first end (844, 982) is provided with a first circular serrated plate (840, 978) and the second end is provided with a second circular serrated plate (842, 980) matching with the first contacting end (858, 996) and the second contacting end (860, 998) of the hook (850, 988) to adjust an angle of the hook (850, 988) with respect to the clamping member (838, 976).

4. The tool (900, 1100) of claim 1-3, wherein the hook assembly (822, 922) further comprises an adjusting mechanism (869, 1015).

5. The tool (800, 900, 1100) of claim 4, wherein the adjusting mechanism (869) comprises a knob (870) and a first bolt (874) threadedly coupled with the knob (870).

6. The tool (800, 900, 1100) of claim 5, wherein the knob (870) is rotatable in a predetermined direction for loosening the hook (850) with respect to the clamping member (838).

7. The tool (800, 900, 1100) of claim 5, wherein the knob (870) is rotatable in a predetermined direction for releasing the clamping member (838) for adjusting a position of the hook assembly (822) along the pole (816).

8. The tool (800, 900, 1100) of claim 5, wherein the adjusting mechanism (1015) comprises a flap (1016) hinged to the clamping member (976).

9. The tool (800, 900, 1100) of claim 8, wherein the flap (1016) is liftable for loosening the hook (988) with respect to the clamping member (976).

10. The tool (800, 900, 1100) of claim 8, wherein the flap (1016) is liftable for releasing the clamping member (976) for adjusting a position of the hook assembly (922) along the pole (916).

## Patentansprüche

1. Werkzeug (800, 900, 1100) umfassend:
ein Werkzeugteil (1102);
einen Stab (816, 916) mit einem ersten Ende (917), wobei das Werkzeugteil (1102) mit dem ersten Ende (917) des Stabs (816, 916) verbunden ist; und
eine Hakenanordnung (822, 922), die an dem Stab (816, 916) angeordnet ist, wobei das Werkzeug **dadurch gekennzeichnet ist, dass** die Hakenanordnung (822, 922) umfasst:
ein Klemmelement (838, 976), das sich an eine Außenfläche (832, 932) des Stabs (816, 916) anpasst; und
einen Haken (850, 988), der drehbar mit dem Klemmelement (838, 976) verbunden ist, wobei der Haken (850, 988) so angepasst ist, dass er sich zwischen einer Betriebsposition und einer Nicht-Betriebsposition ausrichtet.

2. Werkzeug (800, 900, 1100) nach Anspruch 1, wobei der Haken (850, 988) ein erstes Kontaktende (858, 996) und ein zweites Kontaktende (860, 998) gegenüber dem ersten Kontaktende (858, 996) umfasst, wobei sowohl das erste Kontaktende (858, 996) als auch das zweite Kontaktende (860, 998) mit einer Vielzahl von Verzahnungen (962, 1000) versehen ist.

3. Werkzeug (800, 900, 1100) nach Anspruch 2, wobei das Klemmelement (838, 976) ein erstes Ende (844, 982) und ein zweites Ende (846, 984) gegenüber dem ersten Ende (844, 982) umfasst, wobei das erste Ende (844, 982) mit einer ersten kreisförmig gezahnten Platte (840, 978) versehen ist, und das zweite Ende mit einer zweiten kreisförmigen, gezahnten Platte (842, 980) versehen ist, die mit dem ersten Kontaktende (858, 996) und dem zweiten Kontaktende (860, 998) des Hakens (850, 988) zusammenpasst, um einen Winkel des Hakens (850, 988) in Bezug auf das Klemmelement (838, 976) einzustellen.

4. Werkzeug (800, 900, 1100) nach Anspruch 1-3, wobei die Hakenanordnung (822, 922) ferner einen Einstellmechanismus (869, 1015) umfasst.

5. Werkzeug (800, 900, 1100) nach Anspruch 4, wobei der Einstellmechanismus (869) einen Knopf (870) und einen ersten Bolzen (874), der mit dem Knopf (870) verschraubt ist, umfasst.

6. Werkzeug (800, 900, 1100) nach Anspruch 5, wobei der Knopf (870) in einer vorbestimmten Richtung drehbar ist, um den Haken (850) in Bezug auf das Klemmelement (838) zu lösen.

7. Werkzeug (800, 900, 1100) nach Anspruch 5, wobei der Knopf (870) in einer vorbestimmten Richtung drehbar ist, um das Klemmelement (838) zum Einstellen einer Position der Hakenanordnung (822) entlang des Stabs (816) zu lösen.

8. Werkzeug (800, 900, 1100) nach Anspruch 5, wobei der Einstellmechanismus (1015) eine Klappe (1016) umfasst, die an das Klemmelement (976) klappbar ist.

9. Werkzeug (800, 900, 1100) nach Anspruch 8, wobei die Klappe (1016) zum Lösen des Hakens (988) in Bezug auf das Klemmelement (976) anhebbar ist.

10. Werkzeug (800, 900, 1100) nach Anspruch 8, wobei die Klappe (1016) anhebbar ist, um das Klemmelement (976) zum Einstellen einer Position der Hakenanordnung (922) entlang des Stabs (916) zu lösen.

## Revendications

1. Outil (800, 900, 1100) comprenant :
une partie d'instrument (1102)
un poteau (816, 916) ayant une première extrémité (917), la partie d'instrument (1102) reliée à la première extrémité (917) du poteau (816, 916) ; et
un ensemble de crochet (822, 922) disposé sur le poteau (816, 916), ledit outil étant **caractérisé par** l'ensemble de crochet (822, 922) incluant :
un élément de préhension (838, 976) se conformant à une surface externe (832, 932) du poteau (816, 916) ; et
un crochet (850, 988) relié de manière rotative à l'élément de préhension (838, 976), dans lequel le crochet (850, 988) est adapté pour s'orienter entre une position de fonctionnement et une position de non-fonctionnement.

2. Outil (800, 900, 1100) selon la revendication 1, dans lequel le crochet (850, 988) comprend une première extrémité de contact (858, 996) et une deuxième extrémité de contact (860, 998) opposée à la première extrémité de contact (858, 996), dans lequel chacune parmi la première extrémité de contact (858, 996) et la deuxième extrémité de contact (860, 998) est munie d'une pluralité de dentelures (962, 1000).

3. Outil (800, 900, 1100) selon la revendication 2, dans lequel l'élément de préhension (838, 976) comprend une première extrémité (844, 982) et une deuxième extrémité (846, 984) opposée à la première extrémité (844, 982), dans lequel la première extrémité (844, 982) est munie d'une première plaque dentelée circulaire (840, 978) et la deuxième extrémité est munie d'une deuxième plaque dentelée circulaire (842, 980) correspondante à la première extrémité de contact (858, 996) et à la deuxième extrémité de contact (860, 998) du crochet (850, 988) pour régler un angle du crochet (850, 988) par rapport à l'élément de préhension (838, 976).

4. Outil (800, 900, 1100) selon les revendications 1 à 3, dans lequel l'ensemble de crochet (822, 922) comprend en outre un mécanisme de réglage (869, 1015).

5. Outil (800, 900, 1100) selon la revendication 4, dans lequel le mécanisme de réglage (869) comprend une tirette (870) et un premier boulon (874) couplé par vissage à la tirette (870).

6. Outil (800, 900, 1100) selon la revendication 5, dans lequel la tirette (870) est pivotante dans une direction prédéterminée pour desserrer le crochet (850) par rapport à l'élément de préhension (838).

7. Outil (800, 900, 1100) selon la revendication 5, dans lequel la tirette (870) est pivotante dans une direction prédéterminée pour relâcher l'élément de préhension (838) afin de régler une position de l'ensemble de crochet (822) le long du poteau (816).

8. Outil (800, 900, 1100) selon la revendication 5, dans lequel le mécanisme de réglage (1015) comprend une patte de fermeture (1016) articulée sur l'élément de préhension (976).

9. Outil (800, 900, 1100) selon la revendication 8, dans lequel la patte de fermeture (1016) est soulevable pour desserrer le crochet (988) par rapport à l'élément de préhension (976).

10. Outil (800, 900, 1100) selon la revendication 8, dans lequel la patte de fermeture (1016) est soulevable pour relâcher l'élément de préhension (976) afin de régler une position de l'ensemble de crochet (922) le long du poteau (916).
